# EUROPEAN PATENT APPLICATION

(11) **EP 2 002 707 A1**
(43) Date of publication of application: **17.12.2008**
(21) Application number: 07109988.1
(22) Date of filing: 11.06.2007
(51) Int. Cl.: A01G 7/02, A01G 31/02

(54) **Growth system for plants**

(71) Applicant: Nederlandse Organisatie voor Toegepast- Natuurwetenschappelijk Onderzoek TNO, 2628 VK The Hague (NL)
(72) Inventor: Smits, Jan J., 3151 CP Hoek van Holland (NL); van Maanen, Franciscus Johannes Ignatius, 2593 BX Den Haag (NL)
(74) Representative: van Loon, C.J.J.

(57) **Abstract**

Growth system for plants, comprising a tube (1) which is arranged to be inserted by plant cartridges (20) each comprising at least one plant (3) and enabling the plant roots to extend into the interior of the tube. Moreover, the tube may comprise moistening channels (4) for moistening the plant roots, drain gutters (5) for draining water surplus and a channel (6) for supplying CO2 and/or another gaseous medium to the plant roots. Additionally, the tube may comprise a permeable separation wall (7) between a plant root area (8) and the drain gutters (5) and/or the channel (6) for supplying CO₂ to the plant roots. The tube, including any comprised channels, may be manufactured of a thin-walled, foil-like plastic, e.g. by extrustion. An antibiofouling layer and/or treatment may be provided at the tube's interior surface.

## Description

The present invention presents a novel growth system for plants.

Aims of this novel growth system according to the present invention comprise:
- low investments;
- no substrate needed like e.g. soil or rockwool;
- more plants per m²;
- considerable less water consumption;
- less pesticides.

To that end a growth system according to the invention preferrably comprises a tube which is arranged to be inserted by plant cartridges each being arranged to comprise at least one plant and enabling the plant roots to extend into the interior of the tube. Moreover it is preferred that the tube comprises at least one moistening channel for moistening the plant roots and, moreover, that the tube comprises at least one drain gutter or channel for draining water surplus.

After germination, the plant roots will extend into the interior of the tube, while the stalks, leafs, flowers and/or fruits extends above the tube. The tube serves for feeding nutriments, water and - when needed - additions to a row plants and for draining away all surpluses. Due to the closed character of the tubes, the plant roots are protected against external pestiferous influences, e.g. caused by bacteria, germs, fungi etc.

It may be preferred that the tube comprises at least one channel for supplying CO2 and/or another gaseous medium to the plant roots. Especially in the first phase of the plant growth the CO₂ pressure may inflate the tube - which preferrably may be manufactured of a thin-walled, foil-like plastic - in order to maintain the desired tube form. When the plants grow, their roots may fill a substantial parts of the inner volume of the tube.

To prevent that the plant roots, by their growth, may hinder the supply of CO₂ and/or the drain of water, it may be preferred that the tube comprises a permeable separation wall between a plant root area - which may be filled by the plants roots - and the drain gutter(s) or channel(s) for draining water surplus and/or the channel(s) for supplying CO₂ to the plant root.

The tube, including any comprised channels etc. preferrably are manufactured by extrustion. To prevent deposition of bacteria etc. in a water film on the tube's inner surface, that inner surface preferrably may be provided with an antibiofouling layer and/or undergo an antibiofouling treatment at its interior surface.

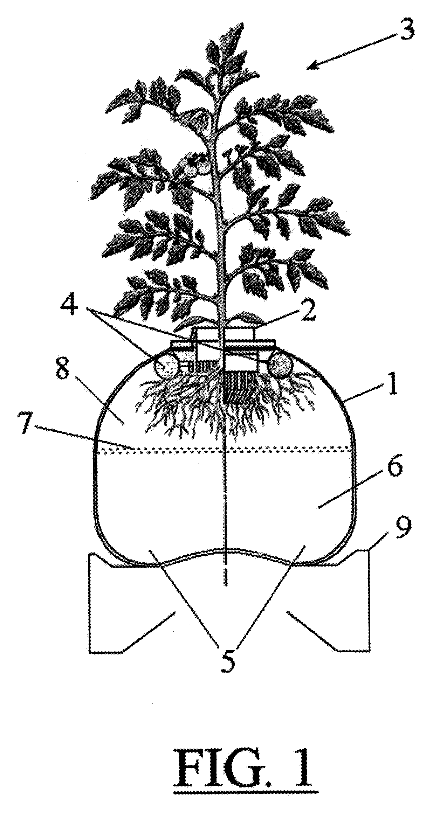

Figure 1 shows a cross-sectional view a preferred embodiment of the growth system according to the invention.

In the embodiment of the novel growth system for plants as shown in figure 1 a tube 1 is arranged to be inserted by plant cartridges 2 each comprising at least one plant - in first instance having the form of seed or seedling - and enabling the plant roots - during the growth - to extend into the interior of the tube. The tube 1 comprises moistening channels 4 for moistening the plant roots by water or mist. To that end the moistening channels 4 will have to be made permeable during the manufacturing process, e.g. by puncturing the walls of channels 4. The tube 1, moreover, comprises at least one drain drain gutter 5 for draining any liquid (water) surplus.

The tube also comprises a channel 6 for supplying CO2 and/or another gaseous medium to the plant roots. To prevent that de channel 6 and/or the gutters 5 grow dense by the plant roots, thus hindering their function, a permeable - e.g. punctured - separation wall 7 between a plant root area (channel) 8 and the drain gutters 5 and/or the channel 6 for supplying CO2 and/or another gaseous medium to the plant roots.

As can easily be understood, the tube, including any comprised channels is able to be manufactured by extrustion. Moreover, the tube, including its channels may be manufactured of a thin-walled, foil-like plastic, e.g. polyethylene.

If desired or needed, to prevent deposition of bacteria etc. in a water film on the tube's inner surface, that inner surface may
- preferrably during the manufacturing process - be provided with an antibiofouling layer and/or undergo an antibiofouling treatment at the interior surface of the channels 6 and 8.

The tube 1 may be carried by a (e.g. metal) support rail 9, which also provides, by its spherical shape, for the two separate drain gutters 5.

## Claims

1. Growth system for plants, comprising
- a tube (1) which is arranged to be inserted by plant cartridges (20) each comprising at least one plant (3) and enabling the plant roots to extend into the interior of the tube;
- the tube comprising at least one moistening channel (4) for moistening the plant roots;
- the tube comprising at least one drain gutter (5) or channel for draining water surplus.

2. Growth system according to claim 1, the tube comprising at least one channel (6) for supplying CO2 and/or another gaseous medium to the plant roots.

3. Growth system according to claim 1 or 2, the tube comprising a permeable separation wall (7) between a plant root area (8) and said at least one drain gutter (5) or channel for draining water surplus and/or said at least one channel (6) for supplying CO₂ to the plant root.

4. Growth system according to any preceding claim, the tube, including any comprised channels, being manufactured by extrustion.

5. Growth system according to any preceding claim, the tube, including any comprised channels, being manufactured of a thin-walled, foil-like plastic.

6. Growth system according to any preceding claim, comprising an antibiofouling layer and/or treatment at its interior surface.
